# EUROPEAN PATENT SPECIFICATION

(11) **EP 0 932 589 B1**
(45) Date of publication and mention of the grant of the patent: **10.04.2002**
(21) Application number: 97913727.0
(22) Date of filing: 20.10.1997
(51) Int. Cl.: C04B 35/58, C04B 41/87, C25C 3/08

(54) **SLURRY AND METHOD FOR PRODUCING REFRACTORY BORIDE BODIES AND COATINGS FOR USE IN ALUMINIUM ELECTROWINNING CELLS**
SCHLICKER UND VERFAHREN ZUR HERSTELLUNG VON FEUERFESTEN KÖRPERN UND BESCHICHTUNGEN AUS BORID ZUR VERWENDUNG IN ELEKTROZELLEN ZUR GEWINNUNG VON ALUMINIUM
BOUILLIE ET PROCEDE DESTINES A LA PRODUCTION DE CORPS ET DE REVETEMENTS REFRACTAIRES A BASE DE BORURE UTILES DANS DES CELLULES D'EXTRACTION ELECTROLYTIQUE D'ALUMINIUM

(30) Priority: 19.10.1996 WO PCT/US96/16595
(43) Date of publication of application: 04.08.1999
(73) Proprietor: MOLTECH Invent S.A., 2320 Luxembourg (LU)
(72) Inventor: SEKHAR, Jainagesh, A., Cincinnati, OH 45208 (US); DURUZ, Jean-Jacques, CH-1204 Geneva (CH); LIU, James, Jenq, Cincinnati, OH 45220 (US)
(74) Representative: Cronin, Brian Harold John
(86) International application number: US9719067
(87) International publication number: WO9817842

(56) References cited:
- WO-A-93/25731
- WO-A-97/08114

## Description

### Field of the Invention

The invention relates to the production of refractory boride coatings and bodies in particular for use in cells for the electrowinning of aluminium by the electrolysis of alumina dissolved in a molten electrolyte such as cryolite or other fluoride-based electrolytes. The invention more specifically relates to a slurry for producing refractory boride coatings and bodies, as well as bodies coated with or made of refractory boride for use as components of aluminium electrowinning cells.

### Background of the Invention

Aluminium is produced conventionally by the Hall-Heroult process, by the electrolysis of alumina dissolved in cryolite-based molten electrolytes at temperatures up to around 950°C. A Hall-Heroult reduction cell typically has a steel shell provided with an insulating lining of refractory material, which in turn has a lining of carbon which contacts the molten constituents. Conductor bars connected to the negative pole of a direct current source are embedded in the carbon cathode substrate forming the cell bottom floor. The cathode substrate is usually an anthracite based carbon lining made of prebaked cathode blocks, joined with a ramming mixture of anthracite, coke, and coal tar, or with glue.

It has long been recognized that it would be desirable to make (or coat or cover) the cathode of an aluminium electrowinning cell with a refractory boride such as titanium diboride that would render the cathode surface wettable to molten aluminium which in turn would lead to a series of advantages. Many difficulties were encountered in producing refractory boride coatings which meet up to the rigorous conditions in an aluminium electrowinning cell. However, as described in the following patents, such coatings have recently been successfully introduced.

U.S. Patent 5,310,476 (Sekhar et al.) discloses a method of producing a protective refractory coating on a substrate of, *inter alia*, carbonaceous materials by applying to the substrate a micropyretic reaction layer from a slurry containing particulate reactants in a colloidal carrier, and initiating a micropyretic reaction. The micropyretic slurry optionally also contains some preformed refractory material, and the micropyretic slurry may be applied on a non-reactive sub-layer.

U.S. Patent 5,364,513 (Sekhar et al.) discloses a method of producing a protective refractory coating by applying to the substrate a reactive or non-reactive layer from a slurry containing particulate reactants and/or preformed particulate refractory materials in a colloidal carrier, and initiating a micropyretic reaction or non-reactive sintering. The colloidal carrier was selected from the group consisting of colloidal alumina, yttria, ceria, thoria, zirconia, magnesia, lithia, monoaluminum phosphate, cerium acetate and mixtures thereof. Various colloid mixtures were disclosed, such as colloidal alumina-colloidal silica and colloidal alumina-monoaluminium phosphate.

U.S. Patent No. 5,651,874 (de Nora et al.) discloses applying a protective coating of a refractory boride such as TiB₂ to a carbon component of an aluminium electrowinning cell, by applying thereto a slurry of particulate boride in a colloid in several layers with drying between each layer.

These coatings have shown outstanding performance compared to previous attempts to apply refractory coatings to components of aluminium electrowinning cells. These aluminium-wettable refractory boride coated bodies can be used in conventional cells with a deep aluminium pool and also permit the elimination of the thick aluminium pool required to partially protect the carbon cathode, enabling the cell to operate with a drained cathode.

These refractory boride coated bodies have the following attributes: excellent wettability by molten aluminium, inertness to attack by molten aluminium and cryolite, low cost, environmentally safe, ability to absorb thermal and mechanical shocks, durability in the environment of an aluminium production cell, and ease of production and processing. The boride coating also acts as a barrier to sodium penetration.

The refractory boride coated bodies find many applications on account of their excellent resistance, protection, and stability when exposed to the corrosive conditions existing in the cell even when the temperature of operation is low as in the Low Temperature electrolysis process for the production of aluminium, see for example U.S. Patent No 4,681,671 (Duruz).

For most applications, thin coatings (less than 1 mm thick) are required and the methods for applying such thin coatings in one or more layers from a slurry in a colloidal carrier have proven to be essentially problem-free. Nevertheless, for some special applications, for example coating certain types of drained-cathode surfaces, it would be desirable to have thicker coatings.

When, however, it was attempted to produce thicker coatings, some problems were encountered, in particular undesirable mud-cracking was found to occur in the finished, dried coating when the coating thickness exceeded about 1 mm or even only 0.8 mm depending on the coating formulation. Mud-cracking involves cracks ranging in width from 0.1 mm to 1 mm. Hairline cracks, typically less than 0.1 mm, (generally from 0.03 to 0.09 mm) are also formed but are more acceptable.

Despite this problem of mud-cracking as the thickness increases, the coatings of U.S. Patent 5,651,874 (de Nora et al) remain outstandingly the best available industrially-applicable coatings.

In WO 97/08114 (Sekhar et al.) filed 21.08.96, priority U.S. 08/519,711 of 28.08.95 which constitutes prior art under PCT Rule 33.1(c), it has been proposed to make bodies of refractory boride, for example by slip casting or pressing a slurry of particulate boride in a colloid.

### Summary of the Invention

The invention sets out to improve the production of refractory boride coatings or bodies for use as cell components for aluminium electrowinning cells, especially for use as cathodes.

One object of the invention is to provide an improved slurry for the production of bodies or coatings of refractory boride.

Another object of the invention is to produce refractory boride coated bodies and refractory boride bodies starting from readily available and relatively inexpensive commercial particulate borides or their precursors in a specific colloidal carrier.

A specific object of the invention is to produce bodies coated with refractory borides with coating thicknesses equal to or greater than those previously possible, without mud-cracking, the coatings being aluminium-wettable and electrically conductive so they can serve as coatings for cathodes or other cell components of aluminium production cells.

In the production of "thick" refractory boride coatings, it has been discovered that the mud-cracking problem can be alleviated by utilizing specific colloidal 5 carriers. Moreover, it has been observed that these specific colloidal carriers are also advantageous when producing normal "thin" coatings and even more advantageous when producing bodies of refractory borides, as opposed to coatings.

According to one main aspect of the invention, a slurry for the production of bodies or coatings of refractory boride comprises particulate preformed refractory boride and/or particulate precursors of refractory boride in a colloidal carrier which comprises colloidal particles with a non-gaussian particle size distribution, comprising a mixture of at least two different grades of the same colloid having mean particle sizes which differ from one another, each grade of colloid having a generally gaussian particle size distribution.

In contrast to the known colloid mixtures of different colloidal components (colloidal alumina and colloidal silica, for example) this colloidal carrier according to the invention is obtainable by mixing two different "grades" of the same colloid, producing a desirable particle size distribution.

"Grade" is to be understood as a range of particle sizes of the colloidal particles, with the mean particle size and at least 50% of the particles within that particular range. Commercially available colloids have a predominant particle size with generally gaussian particle size distribution.

Use of this bi- or multigrade colloidal carrier, advantageously in combination with an organic additive, provides an unexpected combination of properties, namely better homogeneity/bonding without cracking and enhanced protection against sodium penetration when the coating or body is used as a component in an aluminium production cell. Moreover, the slurry with this mixed colloidal carrier has improved thixotropic properties, in particular it remains in suspension much longer than standard colloids, which leads to significant cost savings. The thixotropic mix minimizes sedimentation of the refractory boride powders and the aged dispersion does not result in dense sediments. The slurry with the mixed colloid thus remains stable, providing increased shelf life, while remaining easy to apply, for example by brushing. Surprisingly, use of the modified colloidal carrier also leads to a lowering of the resistivity of the coating or body, thereby increasing the cell efficiency.

It should be noted that mixing of different types of colloids is not normally to be recommended because physical and chemical reactions may take place resulting in coagulation, flocculation, rise in pH or irreversible gelation. In the colloid mixture according to the invention, one colloid will generally be of the polymeric type, and the other non-polymeric.

Usually, two distinct fractions of colloidal particles have mean particle sizes which differ from one another by 10-50 nanometers, and the slurry can include a first fraction of colloidal particles with a mean particle size in the range 5-50 nanometers (e.g. 10-30 nanometers), and a second fraction of colloidal particles with a mean particle size in the range 30-100 nanometers (e.g. 40-60 nanometers). This slurry optionally further includes a third distinct fraction of colloidal particles with a mean particle size in the range 100-250 nanometers.

The first and second particle fractions of the slurry can be in a volume ratio from 10:6 to 10:16, for example from 10:8 to 10:14 or more particularly from 10:10 to 10:12, i.e. by volume of the colloids in the mixture.

In another aspect, the slurry according to the invention comprises 30-50 volume% of colloids with a mean particle size less than 20-40 nanometers and 70-50 volume% of colloids with a mean particle size greater than 20-40 nanometers. For example the colloid can contain 30-50 volume%, say about 40 volume%, of colloids with a mean particle size less than about 30 nanometers and 70-50 volume%, say about 60 volume% of colloids with a mean particle size greater than about 30 nanometers.

In advantageous embodiments, the colloids contain particle fractions wherein the largest fraction has a mean diameter of 60 nanometres, or even 50 nanometres. Such colloids contain a large spread of particles with diameters less than 50 nanometres.

The slurry's colloidal carrier is usually selected from the group consisting of colloidal alumina, yttria, ceria, thoria, zirconia, magnesia, lithia, monoaluminum phosphate, cerium acetate and mixtures thereof. Normally, however, the colloidal particles of the colloidal carrier are all particles of the same colloid. It is surprising that a mixture of one colloid, say colloidal alumina, obtainable by mixing together two grades of colloidal alumina with different mean particle sizes, is advantageous compared to the individual grades.

The colloidal carrier is usually in an aqueous medium but, advantageously, the slurries of the present invention also include at least one organic additive selected from the group consisting of polyvinyl alcohol, polyethylene glycol, ethylene glycol, polyacrylic acid, hydroxy propyl methyl cellulose, butyl benzyl phthalate and aluminium polymethacrylate.

The colloid may be derived from colloid precursors and reagents which are solutions of at least one salt such as chlorides, sulfates, nitrates, chlorates, perchlorates or metal organic compounds such as alkoxides, formates, acetates of aluminium, silicon, yttrium, cerium, thorium zirconium, magnesium and lithium. These colloid precursors or colloid reagents can contain a chelating agent such as acetyl acetone or ethylacetoacetate. The aforesaid solutions of metal organic compounds, principally metal alkoxides, can be of the general formula M(OR)_{z} where M is a metal or complex cation, R is an alkyl chain and z is a number, preferably from 1 to 12.

It is also possible to include further components in the colloidal slurry, for example powdered aluminium which improves the conductivity of the resulting coating or body.

The pre-formed particulate refractory boride is usually selected from borides of titanium, chromium, vanadium, zirconium, hafnium, niobium, tantalum, molybdenum and cerium. The preferred particulate refractory boride is titanium diboride.

When choosing the refractory boride powder, the particle size selection is of some importance. It is preferable to choose particle size below 100 micrometers and to choose particle sizes which are varied. For example it is preferable to choose particle sizes extending over a range where the smallest particles are at least two times and preferably at least three times smaller than the large ones. Generally, the ratio of the particle sizes will be in the range from 2:1 to 15:1, usually from about 3:1 to 10:1, for instance a ratio of about 3:1 with large particles in the range 15 to 30 micrometers and small particles in the range 5 to 10 micrometers, or a ratio of about 10:1 with large particles in the range from 30 to 50 micrometers and small particles in the range from 3 to 5 micrometers. Usually, the preformed particulate metal boride has particles with sizes in the range from about 3 micrometers to about 50 micrometers.

It has been ascertained that the choice of the particle size of the metal boride influences the maximum thickness obtainable without mud-cracking and, for all types and mixtures of the refractory boride, use of the mixed colloidal carrier according to the invention increases the maximum obtainable thickness without mud-cracking. Mud-crack-free coatings up to 4, 6 or even 8 mm thick can thus be achieved.

The slurry usually contains 5 - 100 g of the pre-formed particulate refractory boride per 10 ml of colloid and each colloid has a dry colloid content corresponding to up to 50 weight% of the colloid plus liquid carrier, preferably from 5 to 30 weight%, the optimum being from 7-20 weight%.

### The Method

According to the invention, there is provided a method of applying a refractory boride to a component of a cell for the production of aluminium by the electrolysis of alumina dissolved in a cryolite-based molten electrolyte, to protect the component from attack by liquid and/or gaseous components of the electrolyte in the form of elements, ions or compounds, the method comprising applying to the surface of the component the previously described mixed bi- or multigrade slurry and drying the coated surface. All previously-described features of the slurry are applicable in the method, such as the inclusion of an organic additive.

The invention also provides a method of producing a body coated with a refractory boride from the group consisting of the borides of titanium, chromium, vanadium, zirconium, hafnium, niobium, tantalum, molybdenum and cerium. The coating according to the invention includes a refractory boride containing a specific grade of colloidal binder or preferably at least two colloids, selected from the group consisting of colloidal alumina, silica, yttria, ceria, thoria, magnesia, lithia, monoaluminium phosphate and cerium acetate, each said colloid having a different grade, and is obtained from a slurry of particulate refractory boride in one or more of said colloids, by forming and drying the slurry.

Drying of the slurry is followed by heat treatment before or after the component is installed in an aluminium production cell.

The slurry is usually applied in several layers, for example by brushing, by roller or spraying, each layer being allowed to dry at least partially in the ambient air or assisted by heating before applying the next layer, followed by a final heat treatment to dry the slurry after application of the last layer. Heating at a temperature from 80 to 300°C can for example be carried out each time an added thickness of about 0.2 to about 0.6 mm is reached by the application of one or more layers.

The resulting coating of refractory boride usually has a dried thickness up to 8.0 mm without mud-cracking.

Another aspect of the invention is a method of producing a self-sustaining body of a refractory boride preferably from the group consisting of the borides of titanium, chromium, vanadium, zirconium, hafnium, niobium, tantalum, molybdenum and cerium, in which the body includes a refractory boride and a colloid preferably from the group consisting of colloidal alumina, silica, yttria, ceria, thoria, zirconia, magnesia, lithia, monoaluminium phosphate and cerium acetate, and is obtained from the previously-described slurry of the invention containing preformed refractory boride, by forming and drying the slurry.

For example, the slurry is cast into a die or mold on a porous layer and the cast slurry is allowed to dry by draining the liquid through the porous layer. Further methods of forming bodies of refractory boride from slurries are disclosed in WO 97/08114 (Sekhar et al.).

To assist rapid wetting by molten aluminium, the bodies made of or coated with refractory borides may be exposed to molten aluminium in the presence of a flux assisting penetration of aluminium into the refractory boride, the flux for example comprising a fluoride, a chloride or a borate, of at least one of lithium and sodium, or mixtures thereof. Such treatment favors aluminization of the surface of the body by the penetration therein of aluminium.

The invention also applies to methods of producing bodies or coatings from a slurry according to the invention which contains, instead of or in addition to particulate preformed refractory boride, precursor powders which react to form the refractory boride(s). For instance titanium and boron powders can be reacted in the presence of preformed titanium diboride which moderates the reaction.

Numerous examples of micropyretic reaction mixtures for this purpose are described in the aforementioned U.S. Patents 5,310,476 and 5,364,513 (both Sekhar et al.), the disclosures whereof are incorporated herein by way of reference.

### Cell Components

The invention also concerns cell components of aluminium production cells, in particular those which in use of the cell are exposed to contact with molten cryolite and/or molten aluminium. The cell component is for instance a cathode or forms part of a cathodic cell bottom, or may be a tile or a component such as a weir or a baffle or grid immersed in the molten aluminium.

According to the invention, there is provided a component of a cell for the production of aluminium by the electrolysis of alumina dissolved in a cryolite-based molten electrolyte, which cell component is subjected to molten cryolite and/or to molten aluminium. The cell component comprises a body or a coating made from the slurry of the present invention.

In the case of components coated with the refractory boride, the main body or substrate of the component will often be made of carbon or of a carbon-containing composite. It is also possible to coat refractory substrates, such as various types of alumina or other refractory oxycompounds as well as composite materials comprising an electrically conductive and an electrically non-conductive component.

For example, a body can be made including titanium diboride as the reaction product of titanium oxide, boron oxide and aluminium from a slurry according to the invention and/or coated with a refractory boride such as titanium diboride by the method of the invention.

Usually, the component will have a porous surface, which is the case for carbon, but coatings can also be applied successfully to essentially impervious substrates.

The component may be a current-carrying component for example a cathode, a cathode current feeder, or the cathodic part of a bipolar electrode. Particular advantages are achieved for drained cathodes where the produced aluminium continuously drains from the cathode surface which is a made of refractory boride or coated with a relatively thick and crack-free coating of refractory boride according to the invention.

The bodies may consist of blocks or tiles that can be fitted together to form a cell bottom of an aluminium production cell, which acts to carry current to the cathodic pool if there is one, or to a thin layer of aluminium in drained cells, or they may form a packed bed of bodies on a cell bottom.

The component advantageously forms part of a cathode through which the electrolysis current flows, the refractory boride cathodic surface being in contact with the cathodically-produced aluminium. For example, it is part of a drained cathode wherein the refractory boride forms the cathodic surface on which the aluminium is deposited cathodically, the component's drained surface being arranged usually upright or at a slope to assist draining of the aluminium. Arrangements with a horizontal drained surface are also possible.

For example, providing a "thick" and crack-free refractory boride coating according to the invention is very advantageous when applied to a drained-cathode grid as described in U.S. Patent 5,472,578 (de Nora).

### Electrolytic Cells and Operation

The invention also relates to an aluminium electrowinning cell comprising a cell component including a body or coating as discussed above as well as a method of producing aluminium using such cells and methods of operating the cells.

Such cells may comprise a component which in operation of the cell is exposed to molten cryolite or aluminium, said component including a body or coating as discussed above, wherein the product aluminium is in contact with the refractory boride, which may be a cathode or form part of a cathodic cell bottom.

A method of operating the cells comprises producing a cell component which includes a body or a coating made from a slurry as described above; optionally subjecting the coated component to heat treatment; placing the component in the cell so that it will be contacted by the cathodically produced aluminium, and/or the molten electrolyte; and operating the cell to produce molten aluminium.

As mentioned previously, in the case of cell components coated with the refractory boride, the main body or substrate of the component can be made of carbon or of a carbon-containing composite or a refractory material as well as composite materials comprising an electrically conductive and an electrically non-conductive component.

Advantageously, the cell includes a component comprising a body including titanium diboride as the reaction product of titanium oxide, boron oxide and aluminium using a slurry according to the invention and/or coated with a refractory boride by the method of the invention.

The cell component may be a current-carrying component for example a cathode, in particular a drained cathode.

Operation of the cell can be at normal operating temperatures (about 950°C) or in a low temperature process, with the molten fluoride-based electrolyte containing dissolved alumina at a temperature below 900°C, usually at a temperature from 680°C to 880°C. The low temperature electrolyte may be a fluoride melt or a mixed fluoride-chloride melt. This low temperature process is operated at low current densities on account of the low alumina solubility.

### Detailed Description

The invention will be further described in the following Examples.

### Example I

A slurry was prepared from a dispersion of 25 g TiB₂, 99.5% pure, -325 mesh (<42 micrometer), with 7 ml of one grade of colloidal alumina (NYACOL® Al-20, a milky liquid with a colloidal particle size grade of about 40 to 60 nanometers, i.e. mean particle size in the range 40 to 60 nanometers) and 6 ml of another grade of colloidal alumina (CONDEA® 10/2 Sol, a clear, opalescent liquid with a colloidal particle size grade of about 10 to 30 nanometers, i.e. mean particle size in the range 10 to 30 nanometers).

Carbon cathode samples measuring 50 x 20 mm were prepared, coated with the above slurry and allowed to dry naturally. The slurry was easy to apply by brush. The slurry was gel-free for a period of at least 5 days after preparation, which is considerably longer than for the individual grades of colloid.

The dried coatings were adherent and mud-crack free with thicknesses of about 0.80 mm.

The thickness of the coatings can be increased without causing mud-cracking by applying multiple layers and drying the layers prior to application of the next layer at a temperature ranging from 80 to 300°C. Preferably, the drying is undergone after each applied layer as a thickness from about 0.2 to 0.7 mm, preferably from 0.3 to 0.6 mm. Alternatively, for multi-layer coatings, each layer of slurry can be allowed to dry for several minutes before applying the next with optionally a final drying by baking in an oven or with warm air at 100-150°C.

Various TiB₂ powders selected from Advanced Ceramics "HCT-30", Advanced Refractory Technologies Inc. "TGF", and Starck Grades "C" and "D", were used in the slurries. Mud-crack free coatings 4.0 to 6.0 mm thick were obtainable depending on the type of TiB₂ used (best results with Starck Grade "C").

Instead of a single grade of TiB₂, advantageously at least two grades of TiB₂ may be used, each with differing particle sizes. The use of a mixture of TiB₂ powders assists preventing the onset of mud-cracking of thick coatings.

The amount of TiB₂ in the slurry was varied from 20 to 30 g and the amount of the colloidal alumina mixture was varied from 10-20 ml total (from 3-10 ml of the NYACOL and from 3-10 ml of the CONDEA). For more dilute slurries a longer drying time was required. For all coatings excellent adhesion to carbon, excellent strength and excellent resistivity was noted.

A coated carbon body produced as above, was subjected to heat treatment at 1250°C for 10 hours under argon, and subjected to a sodium penetration test by connecting it as a cathode in a NaF/NaCl bath (67.7 wt%/32.3 wt%) at 720°C for 4.5 hours at a current density of 0.15 A/cm². Non-coated carbon cathodes subjected to the same treatment show signs of deterioration due to sodium penetration. Improved sodium resistance was obtained the greater the amount of the larger particle size colloid compared to the lower particle size.

The green strength of the coatings or bodies was found to improve the greater the amount of the smaller particles compared to the larger particles.

Overall, best results were obtained with a volume ratio of the CONDEA (smaller colloidal particles) to NYACOL (larger colloidal particles) in the ratio 10:10 to 10:12.

### EXAMPLE II (COMPARATIVE)

A slurry was prepared from a dispersion of 25 g TiB₂, 99.5% pure, -325 mesh (<42 micrometer), per 10 ml of colloidal alumina containing about 20 weight% of solid alumina, using the same NYACOL or CONDEA grade as in Example I, but singly and not mixed. If several coats were applied, as in Example I, each layer of slurry was allowed to dry for several minutes before applying the next, with an optional final drying by baking in an oven at 100-150°C. Coating thicknesses of about 0.15 to about 0.55 mm were obtainable without mud-cracking. However, for thicker coatings, mud-cracking was observed.

The TiB₂ in the slurry was varied from 5 to 15 g and the colloidal alumina was varied from 10-40 ml. For more dilute slurries a longer drying time was required. Increasing the colloidal alumina content increases the electrical resistivity by increasing the volume percentage of non-conducting material in the sample.

After the sodium-resistance test as in Example I, the non mud-cracked "thin" samples showed no sign of deterioration and were wetted by aluminium. However, the sodium resistance was not as good as the coating of Example 1. The thicker mud-cracked samples displayed inferior performance.

### EXAMPLE III

In order to obtain improved coatings without mud-cracks (in particular to enable use of lesser-performing grades of TiB₂ and to reduce the need to use two grades of TiB₂) certain organic additives were added to the slurry of Example I. The organic additives tested were: polyvinyl alcohol; polyacrylic acid; hydroxy propyl methyl cellulose; polyethylene glycol; ethylene glycol; butyl benzyl phthalate; and ammonium polymethacrylate. The results are reported in Table I below.

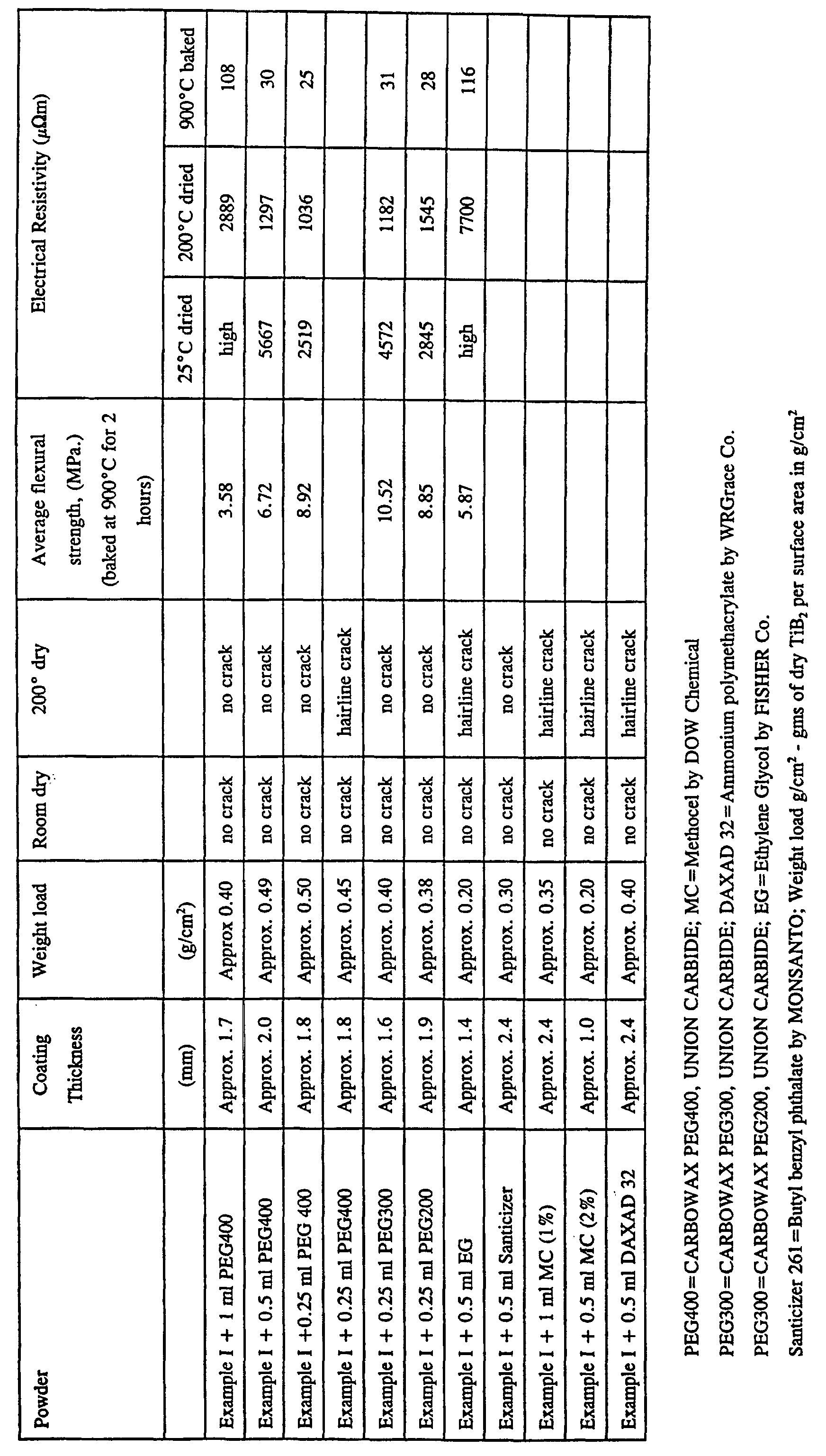

### Example IV

A slurry was prepared from a dispersion of TiB₂ powder, - 325 mesh (<42 micrometer), in colloidal alumina (CONDEA) ranging from particle size grades of 15 nanometers through 200 nanometers consisting of a mixture of three grades (Grade 10/2, mean particle size in the range 10 - 30 nanometers; Grade 20/2, mean particle size in the range 30 - 50 nanometers; Grade 25/5, mean particle size in the range 170 - 230 nanometers). Comparative samples were made with the individual grades of colloid. The slurry was prepared by mixing the TiB₂ powder with the colloidal alumina. All the slurries are made with about 9 weight percent colloidal alumina and the rest TiB₂ powder.

The slurry is then coated onto cathode samples as in Example I or slip cast into block-shaped samples.

The electrical resistivity of block samples was measured by the four point probe method according to the ASTM C611-84 standard, both for the green body and after bonding by heat treatment ("sintering"). A constant current of 1 ampere (generated by a Keithly™ 228A voltage/current apparatus) was passed through the sample and the voltage drop recorded.

The flexural strength of the green and "sintered" composite samples was measured by the four point bending test, performed with an Instron™ 4206 machine according to the standard method from the ASTM mechanical property handbook. The crosshead speed of loading was kept at a constant rate of 0.1 mm/min for all samples.

For measurement of the interfacial bonding strength, the "sintered" samples were arranged precisely under the Instron-4206 machine. A small load was applied with the crosshead speed at 1 mm/min. The maximum load was recorded for the calculation of the interfacial bonding strength by strength (S)= F(maximum load)/πdh (Area).

All of the mixed-colloid slurries of Examples I and IV were found to be non-Newtonian, and the viscosity of the slurry is noted to decrease with an increasing shear rate.

Surprisingly and unexpectedly, the electrical resistivity of the green composites was found to be lower (better) and the strength was found to be higher (better). The green resistivity for the CONDEA Disperal 25/5 based slurry composite alone was found to be unexpectedly high. Similar results were obtained for the "sintered" (2 hours at 900°C) composites as well.

For coated samples, interfacial bonding strengths were observed to be very low for the CONDEA Disperal Grade 25/5 based slurry alone. The Grade 20/2 based slurry displayed the best interfacial bonding strength.

The slurries with a mixture of the Grades 10/2 and 20/2 colloidal alumina and a mixture of Grades 10/2, 20/2 and 25/5 colloidal alumina showed best all round properties: no mud-crack formation, low electrical resistivity and good interfacial bonding.

It will be understood that modifications may be made in the present invention without departing from scope of the following claims.

### Example V

The slurry of Example I was cast into a rectangular die on a plaster of Paris base and was allowed to dry in ambient conditions by draining of the liquid through the plaster. After drying for several hours, the "green" body was removed from the die. It formed a self-sustaining body which was then subjected to heat treatment at 1200°C for 24 hours under Argon. The resulting body of TiB₂ bonded by the dried colloid was mechanically stronger than a comparable body made by slip casting a slurry with the individual grades of colloid and its electrical resistivity was lower. This slip-casting procedure was much more convenient using the mixed-colloid slurry according to the invention, than when using a slurry with the individual grades of colloid.

## Claims

1. A slurry for the production of bodies or coatings of refractory boride, the slurry comprising particulate preformed refractory boride and/or particulate precursors of refractory boride in a colloidal carrier, wherein the colloidal carrier comprises colloidal particles with a non-gaussian particle size distribution, comprising a mixture of at least two different grades of the same colloid having mean particle sizes which differ from one another, each grade of colloid having a generally gaussian particle size distribution.

2. The slurry of claim 1, wherein said two different grades of colloidal particles have mean particle sizes which differ from one another by 10-50 nanometers.

3. The slurry of claim 2, wherein said two different grades of colloidal particles have mean particle sizes which differ from one another by 10-30 nanometers.

4. The slurry of claim 2, including a first grade of colloidal particles with a mean particle size in the range 5-50 nanometers, and a second grade of colloidal particles with a mean particle size in the range 30-100 nanometers.

5. The slurry of claim 4, including a first grade of colloidal particles with a mean particle size in the range 10-30 nanometers, and a second grade of colloidal particles with a mean particle size in the range 40-60 nanometers.

6. The slurry of claim 4 , further including a third different grade of colloidal particles with a mean particle size in the range 100-250 nanometers.

7. The slurry of claim 1, wherein the first and second particle grade are in a volume ratio from 10:6 to 10:16.

8. The slurry of claim 4, wherein the first and second particle grade are in a volume ratio from 10:8 to 10:14.

9. The slurry of claim 5, wherein the first and second particle grade are in a volume ratio from 10:10 to 10:12.

10. The slurry of claim 1, wherein the colloidal carrier is selected from the group consisting of colloidal alumina, yttria, ceria, thoria, zirconia, magnesia, lithia, monoaluminum phosphate, cerium acetate and mixtures thereof.

11. The slurry of claim 1, wherein the pre-formed particulate refractory boride is selected from borides of titanium, chromium, vanadium, zirconium, hafnium, niobium, tantalum, molybdenum and cerium.

12. The slurry of claim 11, wherein the pre-formed particulate refractory boride is titanium diboride.

13. The slurry of claim 12, wherein the colloidal carrier is colloidal alumina.

14. The slurry of claim 1, comprising 5-100 g of the pre-formed particulate refractory boride per 10 ml of total colloid.

15. The slurry of claim 1, wherein the colloid has a dry colloid content corresponding to up to 50 weight% of the colloid plus liquid carrier.

16. The slurry of claim 15, wherein the colloidal carrier has a dry colloid content corresponding to from 5 to 30 weight% of the colloid plus liquid carrier.

17. The slurry of claim 1, further comprising an organic additive selected from the group consisting of polyvinyl alcohol; polyacrylic acid; hydroxy propyl methyl cellulose; polyethylene glycol; ethylene glycol; butyl benzyl phthalate; ammonium polymethacrylate and mixtures thereof.

18. The slurry of claim 1, wherein the mean particle size of all colloidal particles in the colloidal carrier is in the range from about 15 to about 50 nanometers.

19. The slurry of claim 1, comprising at least two different particle size grades of particulate refractory boride.

20. A component of a cell for the production of aluminium by the electrolysis of alumina dissolved in a cryolite-based molten electrolyte, which cell component is made of or coated with refractory boride obtained from the slurry of claim 1, the refractory boride being bonded with at least two different grades of colloidal particles having mean particle sizes which differ from one another.

21. The component of claim 20, wherein the colloidal carrier is selected from the group consisting of colloidal alumina, yttria, ceria, thoria, zirconia, magnesia, lithia, monoaluminum phosphate, cerium acetate and mixtures thereof.

22. The component of claim 20, wherein the particulate refractory boride is selected from borides of titanium, chromium, vanadium, zirconium, hafnium, niobium, tantalum, molybdenum and cerium.

23. The component of claim 22, wherein the pre-formed particulate refractory boride is titanium diboride.

24. The component of claim 23, wherein said colloid is colloidal alumina.

25. The component of claim 20, wherein the two colloidal carriers have mean colloidal particle sizes which differ from each other by 10-50 nanometers.

26. The component of claim 20, wherein the coating further comprises an organic additive selected from the group consisting of polyvinyl alcohol; polyacrylic acid; hydroxy propyl methyl cellulose; polyethylene glycol; ethylene glycol; butyl benzyl phthalate; ammonium polymethacrylate and mixtures thereof.

27. The component of claim 20, comprising a non mud-cracked coating of refractory boride having a dried thickness up to 8.0 mm.

28. The component of claim 20, wherein the mean particle size of all colloidal particles in the colloidal carrier is in the range from about 15 to about 50 nanometers.

29. The component of claim 20, which comprises a carbon-containing body coated with a refractory boride coating.

30. The component of claim 20, which is a cathode or forms part of or is fitted on a cathodic cell bottom.

31. A method of applying a refractory boride to a component of a cell for the production of aluminium by the electrolysis of alumina dissolved in a cryolite-based molten electrolyte, to protect the component from attack by liquid and/or gaseous components of the electrolyte in the form of elements, ions or compounds, the method comprising applying to the surface of the component the slurry of claim 1 and drying said coated surface.

32. The method of claim 31, wherein the drying is followed by heat treatment before or after the component is installed in an aluminium production cell.

33. The method of claim 31, wherein the slurry is applied in several layers, each layer being allowed to dry at least partially in the ambient air or assisted by heating before applying the next layer, followed by a final heat treatment to dry the slurry after application of the last layer.

34. The method of claim 31, comprising heating at a temperature from 100 to 300°C each time an added thickness of about 0.2 to about 0.6 mm is reached.

35. A method of producing a self-sustaining body of refractory boride from the group consisting of the borides of titanium, chromium, vanadium, zirconium, hafnium, niobium, tantalum, molybdenum and cerium, in which the body includes a refractory boride and a colloid from the group consisting of colloidal alumina, silica, yttria, ceria, thoria, zirconia, magnesia, lithia, monoaluminium phosphate and cerium acetate, and is obtained from the slurry of claim 1 containing preformed refractory boride, by forming and drying the slurry.

36. The method of claim 35, wherein the slurry is cast into a die or mould on a porous layer and the cast slurry is allowed to dry by draining the liquid through the porous layer.

37. A self-sustaining body of refractory boride obtainable by the method of claim 35, the body comprising refractory boride particles bonded with colloidal particles comprising at least two different grades of colloidal particles having mean particle sizes which differ from one another.

38. An aluminium production cell comprising a component which in operation of the cell is exposed to molten cryolite or aluminium, which cell component is made of or coated with refractory boride obtained from the slurry of claim 1, the refractory boride being bonded with at least two different grades of colloidal particles having mean particle sizes which differ from one another.

39. The aluminium production cell of claim 38, wherein said component is a cathode or forms part of or is fitted on a cathodic cell bottom.

40. A body which is made of or coated with refractory boride obtained from the slurry of any one of claims 1 to 19, the refractory boride being bonded with at least two different grades of colloidal particles having mean particle sizes which differ from one another.

## Patentansprüche

1. Aufschlämmung für die Herstellung von Körpern oder Beschichtungen aus feuerfestem Borid, wobei die Aufschlämmung teilchenförmiges vorgebildetes feuerfestes Borid und/oder teilchenförmige Vorläufer von feuerfestem Borid in einem kolloidalen Träger umfasst, wobei der kolloidale Träger kolloidale Teilchen mit einer nicht-gaußschen Teilchengrößeverteilung umfasst, die eine Mischung von mindestens zwei verschiedenen Qualitäten des gleichen Kolloids mit mittleren Teilchengrößen umfassen, die sich voneinander unterscheiden, wobei jede Qualität an Kolloid eine im Allgemeinen Gauß'sche Teilchengrößeverteilung aufweist.

2. Aufschlämmung nach Anspruch 1, bei der die zwei verschiedenen Qualitäten von Kolloidteilchen mittlere Teilchengrößen aufweisen, die sich voneinander um 10 bis 50 nm unterscheiden.

3. Aufschlämmung nach Anspruch 2, bei der die beiden unterschiedlichen Qualitäten von kolloidalen Teilchen mittlere Teilchengrößen aufweisen, die sich voneinander um 10 bis 30 nm unterscheiden.

4. Aufschlämmung nach Anspruch 2, die eine erste Qualität von kolloidalen Teilchen mit einer mittleren Teilchengröße im Bereich von 5 bis 50 nm und eine zweite Qualität von kolloidalen Teilchen mit einer mittleren Teilchengröße im Bereich von 30 bis 100 nm enthält.

5. Aufschlämmung nach Anspruch 4, die eine erste Qualität von kolloidalen Teilchen mit einer mittleren Teilchengröße im Bereich von 10 bis 30 nm und eine zweite Qualität von kolloidalen Teilchen mit einer mittleren Teilchengröße im Bereich von 40 bis 60 nm enthält.

6. Aufschlämmung nach Anspruch 4, die ferner eine dritte unterschiedliche Qualität von kolloidalen Teilchen mit einer mittleren Teilchengröße im Bereich von 100 bis 250 nm enthält.

7. Aufschlämmung nach Anspruch 1, bei der die ersten und zweiten Teilchenqualitäten in einem Volumenverhältnis von 10 : 6 bis 10 : 16 vorliegen.

8. Aufschlämmung nach Anspruch 4, bei der die ersten und zweiten Teilchenqualitäten in einem Volumenverhältnis von 10 : 8 bis 10 : 14 vorliegen.

9. Aufschlämmung nach Anspruch 5, bei der die ersten und zweiten Teilchenqualitäten in einem Volumenverhältnis von 10 : 10 bis 10 : 12 vorliegen.

10. Aufschlämmung nach Anspruch 1, bei der der kolloidale Träger ausgewählt ist aus der Gruppe bestehend aus kolloidalem Aluminiumoxid, Yttriumoxid, Ceroxid, Thoriumoxid, Zirkoniumoxid, Magnesiumoxid, Lithiumoxid, Monoaluminiumphosphat, Ceracetat und Mischungen derselben.

11. Aufschlämmung nach Anspruch 1, bei der das vorgebildete teilchenförmige feuerfeste Borid ausgewählt ist aus Boriden von Titan, Chrom, Vanadin, Zirkonium, Hafnium, Niob, Tantal, Molybdän und Cer.

12. Aufschlämmung nach Anspruch 11, bei der das vorgebildete teilchenförmige feuerfeste Borid Titandiborid ist.

13. Aufschlämmung nach Anspruch 12, bei der der kolloidale Träger kolloidales Aluminiumoxid ist.

14. Aufschlämmung nach Anspruch 1, die 5 bis 100 g des vorgebildeten teilchenförmigen feuerfesten Borids pro 10 ml des gesamten Kolloids umfasst.

15. Aufschlämmung nach Anspruch 1, bei der das Kolloid einen Trockenkolloidgehalt aufweist, der bis zu 50 Gew.-% des Kolloids plus flüssigem Träger entspricht.

16. Aufschlämmung nach Anspruch 15, bei der der kolloidale Träger einen Trockenkolloidgehalt aufweist, der 5 bis 30 Gew.-% des Kolloids plus flüssigem Träger entspricht.

17. Aufschlämmung nach Anspruch 1, die ferner ein organisches Additiv ausgewählt aus der Gruppe bestehend aus Polyvinylalkohol, Polyacrylsäure, Hydroxypropylmethylcellulose, Polyethylenglykol, Ethylenglykol, Butylbenzylphthalat, Ammoniumpolymethacrylat und Mischungen derselben umfasst.

18. Aufschlämmung nach Anspruch 1, bei der die mittlere Teilchengröße aller kolloidalen Teilchen in dem kolloidalen Träger im Bereich von etwa 15 bis etwa 50 nm liegt.

19. Aufschlämmung nach Anspruch 1, die mindestens zwei unterschiedliche Teilchengrößequalitäten von teilchenförmigem feuerfestem Borid umfasst.

20. Komponente einer Zelle für die Herstellung von Aluminium durch Elektrolyse von Aluminiumoxid, das in einem auf Kryolit basierenden geschmolzenen Elektrolyten gelöst ist, wobei die Zellenkomponente aus feuerfestem Borid hergestellt oder damit beschichtet ist, das aus der Aufschlämmung gemäß Anspruch 1 erhalten worden ist, wobei das feuerfeste Borid mit mindestens zwei unterschiedlichen Qualitäten von kolloidalen Teilchen gebunden ist, die mittlere Teilchengrößen aufweisen, die sich voneinander unterscheiden.

21. Komponente nach Anspruch 20, bei der der kolloidale Träger ausgewählt ist aus der Gruppe bestehend aus kolloidalem Aluminiumoxid, Yttriumoxid, Ceroxid, Thoriumoxid, Zirkoniumoxid, Magnesiumoxid, Lithiumoxid, Monoaluminiumphosphat, Ceracetat und Mischungen derselben.

22. Komponente nach Anspruch 20, bei der das teilchenförmige feuerfeste Borid ausgewählt ist aus Boriden von Titan, Chrom, Vanadin, Zirkonium, Hafnium, Niob, Tantal, Molybdän und Cer.

23. Komponente nach Anspruch 22, bei der das vorgebildete teilchenförmige feuerfeste Borid Titandiborid ist.

24. Komponente nach Anspruch 23, bei der das Kolloid kolloidales Aluminiumoxid ist.

25. Komponente nach Anspruch 20, bei der die beiden kolloidalen Träger mittlere kolloidale Teilchengrößen aufweisen, die sich voneinander um 10 bis 50 nm unterscheiden.

26. Komponente nach Anspruch 20, bei der die Beschichtung ferner ein organisches Additiv ausgewählt aus der Gruppe bestehend aus Polyvinylalkohol, Polyacrylsäure, Hydroxypropylmethylcellulose, Polyethylenglykol, Ethylenglykol, Butylbenzylphthalat, Ammoniumpolymethacrylat und Mischungen derselben umfasst.

27. Komponente nach Anspruch 20, die eine nicht-schlammgerissene Beschichtung von feuerfestem Borid mit einer getrockneten Dicke von bis zu 8,0 mm umfasst.

28. Komponente nach Anspruch 20, bei der die mittlere Teilchengröße von allen kolloidalen Teilchen in dem kolloidalen Träger im Bereich von etwa 15 bis etwa 50 nm liegt.

29. Komponente nach Anspruch 20, die einen Kohlenstoff enthaltenden Körper umfasst, der mit einer feuerfesten Boridbeschichtung beschichtet ist.

30. Komponente nach Anspruch 20, die eine Kathode ist oder einen Teil eines kathodischen Zellbodens bildet oder auf einem kathodischen Zellboden angebracht ist.

31. Verfahren zur Aufbringung eines feuerfesten Borids auf eine Komponente einer Zelle für die Herstellung von Aluminium durch Elektrolyse von Aluminiumoxid, das in einem auf Kryolit basierenden geschmolzenen Elektrolyten gelöst ist, um die Komponente vor dem Angriff durch flüssige und/oder gasförmige Komponenten des Elektrolyts in Form von Elementen, Ionen oder Verbindungen zu schützen, wobei das Verfahren die Aufbringung der Aufschlämmung gemäß Anspruch 1 auf die Oberfläche der Komponente und die Trocknung der beschichteten Oberfläche umfasst.

32. Verfahren nach Anspruch 31, bei dem auf die Trocknung eine Hitzebehandlung erfolgt, bevor oder nachdem die Komponente in einer Aluminiumproduktionszelle installiert wird.

33. Verfahren nach Anspruch 31, bei dem die Aufschlämmung in mehreren Schichten aufgebracht wird, wobei jede Schicht zumindest teilweise in der Umgebungsluft oder unterstützt durch Erhitzen trocknen gelassen wird, bevor die nächste Schicht aufgebracht wird, gefolgt von einer abschließenden Hitzebehandlung, um die Aufschlämmung nach Aufbringung der letzten Schicht zu trocknen.

34. Verfahren nach Anspruch 31, das die Erhitzung auf eine Temperatur von 100 bis 300 °C jedes Mal umfasst, wenn eine zugefügte Dicke von etwa 0,2 bis etwa 0,6 mm erreicht ist.

35. Verfahren zur Herstellung eines sich selbsttragenden Körpers von feuerfestem Borid aus der Gruppe bestehend aus den Boriden von Titan, Chrom, Vanadin, Zirkonium, Hafnium, Niob, Tantal, Molybdän und Cer, wobei der Körper ein feuerfestes Borid und ein Kolloid aus der Gruppe bestehend aus kolloidalem Aluminiumoxid, Siliciumoxid, Yttriumoxid, Ceroxid, Thoriumoxid, Zirkoniumoxid, Magnesiumoxid, Lithiumoxid, Monoaluminiumphosphat und Ceracetat enthält und aus der Aufschlämmung gemäß Anspruch 1 erhalten worden ist, die vorgebildetes feuerfestes Borid enthält, indem die Aufschlämmung geformt und getrocknet wird.

36. Verfahren nach Anspruch 35, bei dem die Aufschlämmung in eine Form (die or mould) auf einer porösen Schicht gegossen wird und die gegossene Aufschlämmung trocknen gelassen wird, indem die Flüssigkeit durch die poröse Schicht abgeführt wird.

37. Sich selbsttragender Körper aus feuerfestem Borid, der nach dem Verfahren gemäß Anspruch 35 erhältlich ist, wobei der Körper feuerfeste Boridteilchen umfasst, die mit kolloidalen Teilchen gebunden sind, die mindestens zwei verschiedene Qualitäten von kolloidalen Teilchen mit mittleren Teilchengrößen umfassen, die sich voneinander unterscheiden.

38. Aluminiumproduktionszelle, die eine Komponente umfasst, die bei Betrieb der Zelle geschmolzenemn Kryolit oder Aluminium ausgesetzt ist, wobei die Zellkomponente aus feuerfestem Borid hergestellt ist oder damit beschichtet ist, das aus der Aufschlämmung gemäß Anspruch 1 erhalten worden ist, wobei das feuerfeste Borid mit mindestens zwei unterschiedlichen Qualitäten von kolloidalen Teilchen gebunden ist, die mittlere Teilchengrößen aufweisen, die sich voneinander unterscheiden.

39. Aluminiumproduktionszelle nach Anspruch 38, bei der die Komponente eine Kathode ist oder einen Teil eines kathodischen Zellbodens bildet oder auf einem Kathodischen Zellboden angebracht ist.

40. Komponente, die aus feuerfestem Borid hergestellt ist oder mit feuerfestem Borid beschichtet ist, das aus der Aufschlämmung gemäß einem der Ansprüche 1 bis 19 erhalten worden ist, wobei das feuerfeste Borid mit mindestens zwei unterschiedlichen Qualitäten von kolloidalen Teilchen gebunden ist, die mittlere Teilchengrößen aufweisen, die sich voneinander unterscheiden.

## Revendications

1. Coulis pour la production de corps ou de revêtements de borure réfractaire, le coulis comprenant du borure réfractaire préformé particulaire et/ou des précurseurs particulaires de borure réfractaire dans un support colloïdal, où le support colloïdal comprend des particules colloïdales ayant une distribution de taille de particules non-gaussienne, et comprenant un mélange d'au moins deux qualités différentes du même colloïde ayant des tailles de particules moyennes qui différent l'une de l'autre, chaque qualité de colloïde ayant une distribution de taille de particules généralement gaussienne.

2. Coulis selon la revendication 1, dans lequel lesdites deux qualités différentes de particules colloïdales ont des tailles de particules moyennes qui diffèrent l'une de l'autre de 10-50 nanomètres.

3. Coulis selon la revendication 2, dans lequel lesdites deux qualités différentes de particules colloïdales ont des tailles de particules moyennes qui diffèrent l'une de l'autre de 10-30 nanomètres.

4. Coulis selon la revendication 2, incluant une première qualité de particules colloïdales ayant une taille de particules moyenne dans le domaine de 5-50 nanomètres, et une seconde qualité de particules colloïdales ayant une taille de particules moyenne dans le domaine de 30-100 nanomètres.

5. Coulis selon la revendication 4, incluant une première qualité de particules colloïdales ayant une taille de particules moyenne dans le domaine de 10-30 nanomètres, et une seconde qualité de particules colloïdales ayant une taille de particules moyenne dans le domaine de 40-60 nanomètres.

6. Coulis selon la revendication 4, incluant de plus une troisième qualité différente de particules colloïdales ayant une taille de particules moyenne dans le domaine de 100-250 nanomètres.

7. Coulis selon la revendication 1, dans lequel la première et la seconde qualités de particules sont dans un rapport de volume de 10 : 6 à 10 : 16.

8. Coulis selon la revendication 4, dans lequel la première et la seconde qualités de particules sont dans un rapport de volume de 10 : 8 à 10 : 14.

9. Coulis selon la revendication 5, dans lequel la première et la seconde qualités de particules sont dans un rapport de volume de 10 : 10 à 10 : 12.

10. Coulis selon la revendication 1, dans lequel le support colloïdal est choisi à partir du groupe composé d'alumine colloïdale, d'yttrine, d'oxyde de cérium, de thorine, de zircone, de magnésie, de lithine, de phosphate de monoaluminium, d'acétate de cérium et des mélanges de ceux-ci.

11. Coulis selon la revendication 1, dans lequel le borure réfractaire particulaire préformé est choisi à partir de borures de titane, de chrome, de vanadium, de zirconium, d'hafnium, de niobium, de tantale, de molybdène et de cérium.

12. Coulis selon la revendication 11, dans lequel le borure réfractaire particulaire préformé est du diborure de titane.

13. Coulis selon la revendication 12, dans lequel le support colloïdal est de l'alumine colloïdale.

14. Coulis selon la revendication 1, comprenant 5-100 g du borure réfractaire particulaire préformé par 10 ml de colloïde total.

15. Coulis selon la revendication 1, dans lequel le colloïde a une teneur de colloïde sec correspondant jusqu'à 50 % en poids du colloïde plus le support liquide.

16. Coulis selon la revendication 15, dans lequel le support colloïdal a une teneur de colloïde sec correspondant de 5 à 30 % en poids du colloïde plus le support liquide.

17. Coulis selon la revendication 1, comprenant de plus un additif organique choisi à partir du groupe constitué d'alcool polyvinylique ; d'acide polyacrylique ; d'hydroxypropylméthylcellulose ; de polyéthylèneglycol ; d'éthylèneglycol ; de butylbenzylphtalate ; de polymétacrylate d'ammonium et des mélanges de ceux-ci.

18. Coulis selon la revendication 1, dans lequel la taille de particules moyenne de toutes les particules colloïdales dans le support colloïdal est dans le domaine d'environ 15 à environ 50 nanomètres.

19. Coulis selon la revendication 1, comprenant au moins deux qualités de taille de particules différentes de borure réfractaire particulaire.

20. Composant d'une cellule pour la production d'aluminium par l'électrolyse d'alumine dissoute dans un électrolyte fondu à base de cryolite, lequel composant de cellule est réalisé en ou revêtu de borure réfractaire obtenu à partir du coulis de la revendication 1, le borure réfractaire étant lié à au moins deux qualités différentes de particules colloïdales ayant des tailles de particules moyennes qui diffèrent l'une de l'autre.

21. Composant selon la revendication 20, dans lequel le support colloïdal est choisi à partir du groupe constitué d'alumine colloïdale, d'yttrine, d'oxyde de cérium, de thorine, de zircone, de magnésie, de lithine, de phosphate de monoaluminium, d'acétate de cérium et des mélanges de ceux-ci.

22. Composant selon la revendication 20, dans lequel le borure réfractaire particulaire est choisi à partir de borures de titane, de chrome, de vanadium, de zirconium, d'hafnium, de niobium, de tantale, de molybdène et de cérium.

23. Composant selon la revendication 22, dans lequel le borure réfractaire particulaire préformé est du diborure de titane.

24. Composant selon la revendication 23, dans lequel ledit colloïde est de l'alumine colloïdale.

25. Composant selon la revendication 20, dans lequel les deux supports colloïdaux ont des tailles de particules colloïdales moyennes qui diffèrent l'une de l'autre, de 10-50 nanomètres.

26. Composant selon la revendication 20, dans lequel le revêtement comprend de plus un additif organique choisi à partir du groupe constitué d'alcool polyvinylique ; d'acide polyacrylique ; d'hydroxypropylméthylcellulose ; de polyéthylèneglycol ; d'éthylèneglycol ; de butylbenzylphtalate ; de polymétacrylate d'ammonium et des mélanges de ceux-ci.

27. Composant selon la revendication 20, comprenant un revêtement non fissuré de borure réfractaire ayant une épaisseur séchée jusqu'à 8,0 mm.

28. Composant selon la revendication 20, dans lequel la taille de particules moyenne de toutes les particules colloïdales dans le support colloïdal est dans le domaine d'environ 15 à environ 50 nanomètres.

29. Composant selon la revendication 20, qui comprend un corps contenant du carbone enrobé d'un revêtement de borure réfractaire.

30. Composant selon la revendication 20, qui est une cathode ou forme une partie de ou est adapté sur un fond de cellule cathodique.

31. Procédé pour appliquer un borure réfractaire à un composant d'une cellule pour la production d'aluminium par l'électrolyse d'alumine dissoute dans un électrolyte fondu à base de cryolite, pour protéger le composant d'attaque par des composants liquides et/ou gazeux de l'électrolyte sous la forme d'éléments, ions ou composés, le procédé consistant à appliquer à la surface du composant le coulis de la revendication 1 et à sécher ladite surface enrobée.

32. Procédé selon la revendication 31, dans lequel le séchage est suivi par un traitement thermique avant ou après que le composant est installé dans une cellule de production d'aluminium.

33. Procédé selon la revendication 31, dans lequel le coulis est appliqué en plusieurs couches, chaque couche étant laissée sécher au moins partiellement dans l'air ambiant ou assistée par chauffage avant d'appliquer la couche suivante, suivi par un traitement thermique final pour sécher le coulis après l'application de la dernière couche.

34. Procédé selon la revendication 31, consistant à chauffer à une température de 100 à 300°C chaque fois qu'une épaisseur ajoutée d'environ 0,2 à environ 0,6 mm est atteinte.

35. Procédé pour produire un corps autoporteur de borure réfractaire à partir du groupe constitué des borures de titane, de chrome, de vanadium, de zirconium, d'hafnium, de niobium, de tantale, de molybdène et de cérium, dans lequel le corps inclut un borure réfractaire et un colloïde du groupe constitué d'alumine colloïdale, de silice, d'yttrine, d'oxyde de cérium, de thorine, de zircone, de magnésie, de lithine, de phosphate de monoaluminium et d'acétate de cérium, et est obtenu à partir du coulis de la revendication 1 contenant du borure réfractaire préformé, en formant et séchant le coulis.

36. Procédé selon la revendication 35, dans lequel le coulis est coulé dans un moule ou une matrice sur une couche poreuse et le coulis coulé est laissé sécher en drainant le liquide à travers la couche poreuse.

37. Corps autoporteur de borure réfractaire pouvant être obtenu par le procédé de la revendication 35, le corps comprenant des particules de borure réfractaire liées à des particules colloïdales comprenant au moins deux qualités différentes de particules colloïdales ayant des tailles de particules moyennes qui diffèrent l'une de l'autre.

38. Cellule de production d'aluminium comprenant un composant qui, en fonctionnement de la cellule, est exposé à de l'aluminium ou de la cryolite fondue, lequel composant de cellule est réalisé en ou revêtu de borure réfractaire obtenu à partir du coulis de la revendication 1, le borure réfractaire étant lié à au moins deux qualités différentes de particules colloïdales ayant des tailles de particules moyennes qui diffèrent l'une de l'autre.

39. Cellule de production d'aluminium selon la revendication 38, dans laquelle ledit composant est une cathode ou forme une partie de ou est adapté sur un fond de cellule cathodique.

40. Composant qui est réalisé en ou revêtu de borure réfractaire obtenu à partir du coulis selon une quelconque des revendications 1 à 19, le borure réfractaire étant lié à au moins deux qualités différentes de particules colloïdales ayant des tailles de particules moyennes qui diffèrent l'une de l'autre.
